# EUROPEAN PATENT APPLICATION

(11) **EP 3 327 910 A1**
(43) Date of publication of application: **30.05.2018**
(21) Application number: 17192176.0
(22) Date of filing: 20.09.2017
(51) Int. Cl.: H02K 33/02

(54) **VIBRATION MOTOR FOR AN ELECTRIC HAND-HELD APPLIANCE**

(30) Priority: 23.11.2016 EP 16200284
(71) Applicant: Braun GmbH, 61476 Kronberg im Taunus (DE)
(72) Inventor: Kraus, Bernhard, 61476 Kronberg (DE)
(74) Representative: Zetterer, Gerd

(57) **Abstract**

The invention relates to a vibration motor (1) for an electric hand-held appliance (20) comprising a first drive element (2), a second drive element (3) and at least one spring element (4) coupling the first drive element to the second drive element. In order to achieve many different forms of vibration, the at least one spring element (4) is arranged such that the second drive element (3) can oscillate in a first direction (6) with a first resonance frequency and can oscillate in a second direction (7) with a second resonance frequency. The first drive element (2) is configured to generate a magnetic field that forces the second drive element (3) in a drive direction (5), wherein the drive direction (5) is not perpendicular to the first and second directions (6, 7). The invention further relates to an electric hand-held appliance (20) with such a vibration motor (1).

## Description

### FIELD OF THE INVENTION

The invention relates to a vibration motor for an electric hand-held appliance comprising a first drive element and a second drive element and at least one spring element coupling the first drive element to the second drive element. The invention further relates to an electric hand-held appliance with such a vibration motor.

### BACKGROUND OF THE INVENTION

In several electric hand-held appliances, it is necessary or advantageous to have a vibrating function included in the device. For example electrical toothbrushes vibrate at the toothbrush head in order to clean teeth. Another example is a wet shaving razor that vibrates during shaving for an improved quality of shaving. For that purpose, those appliances comprise vibration motors.

Typical vibration motors consist of a direct current motor with a vibration mass that is attached to the motor eccentrically to the motor axis. These motors are also referred to as eccentric rotating mass (ERM) motors. The vibration mass introduces an imbalance to the motor. The rotary motion of the eccentric mass causes a vibration of the respective device with a more or less circular or elliptic motion. The frequency of this vibration can be adjusted by changing the voltage applied to the direct current motor which in turn changes the speed of the motor. The form as well as the amplitude of the vibrating motion cannot be adjusted with such a vibration motor.

Another possibility for a vibration motor is a linear resonant actuator (LRA) motor that causes a linear vibrating motion of the device. Typical linear resonant actuator vibration motors allow the amplitude of the oscillation to be changed with a corresponding motor control, but the motor frequency is mainly limited to the resonance frequency of the motor and, thus, can only be changed in very small extent. The form of the vibrating motion is always linear and cannot be changed in any way. Such a linear resonant actuator (LRA) motor typically comprises a first drive element for generating a magnetic field, a second drive element in the form of a magnet and a coil spring coupling the first drive element to the second drive element.

From the CN 205 081 655 U a vibration motor is known for portable consumer electronic products. The vibration motor comprises a vibration part which is supported elastically in a housing, enabling the vibration part to move in two directions. The vibration part comprises a mass block and several magnets. A coil is arranged opposite of the mass block to generate a magnetic field to deflect the magnets in the mass block. The coil does not have a predominant direction with respect to the two moving directions of the vibration part.

It is an object of the present invention to provide a vibration motor that can drive a device in a wide variety of different vibration forms with an adjustable frequency and amplitude of the vibrating motion. It is a further object to provide an electric hand-held appliance with such a vibration motor.

### SUMMARY OF THE INVENTION

According to one aspect, a vibration motor for an electric hand-held appliance comprises a first drive element, a second drive element and at least one spring element coupling the first drive element to the second drive element. The first drive element comprises a magnetic core and at least one coil winding that form an electro magnet for generating a magnetic field that forces the second drive element in a drive direction. The at least one spring element has differing spring constants in two directions, resulting in at least a first resonance frequency in a first direction and a second resonance frequency in a second direction. The at least one spring element is arranged such that the drive direction is not perpendicular to the first and second direction and can have any angle between the first and the second direction.

According to a further aspect an electric hand-held appliance, e.g. a toothbrush, a skin treatment device or a hair removal device, comprises at least one vibration motor as defined above.

### BRIEF DESCRIPTION OF THE DRAWINGS

Fig. 1 shows a schematic perspective view of a vibration motor;
Fig. 2 shows top view of a vibration motor;
Fig. 3 shows two side views of a vibration motor;
Fig. 4 shows a schematic circuit for supplying a control signal to the vibration motor and two graphs showing the response of the vibration motor depending on the exciting frequency;
Fig. 5 shows a schematic circuit arrangement of a vibration motor and examples for control signals;
Fig. 6 shows a schematic view of a wet shaving razor with a vibration motor;
Fig. 7 shows further embodiments of leaf springs for use in a vibration motor;
Fig. 8 shows a twisted leaf spring for use in a vibration motor; and
Fig. 9 shows a vibration motor with two twisted leaf springs as spring element.

### DETAILED DESCRIPTION OF THE INVENTION

The inventive vibration motor for an electric hand-held appliance comprises a first drive element, a second drive element and at least one spring element coupling the first drive element to the second drive element. The first drive element may comprise a base that is coupled to a housing of the electric hand-held appliance, whereas the second drive element may comprise a vibration mass. As is apparent to the one skilled in the art, it is also possible to couple the second drive element to the housing of the electric hand-held appliance, whereas the first drive element comprises the vibration mass. This vibration mass may then oscillate with respect to the housing. The at least one spring element, coupling the first drive element to the second drive element is arranged such that the second drive element may move and therefore also oscillate in a first direction and a second direction. The at least one spring element may be arranged such that it has a first spring constant in the first direction and a second spring constant in the second direction. Hence, the second drive element may perform a linear oscillation in a first direction with a first resonance frequency and another linear oscillation in a second direction with a second resonance frequency. By the super position of the two linear oscillations, the second drive element may oscillate in two dimensions with respect to the first drive element. Thereby the vibrating mass may oscillate in two directions with respect to the housing.

For driving the vibration motor, i.e. supplying energy to the oscillations, the first drive element comprises a magnetic core and at least one coil winding that form an electro magnet for generating a magnetic field, wherein this magnetic field interacts with the second drive element in a way such that a magnetic force is applied to the second drive element that forces the second drive element in a drive direction. Hence the drive direction is defined by the direction of the magnetic force acting on the second drive element. The second drive element may be forced in the drive direction independent of a possible deflection of the second drive element in the first or second direction. This drive direction is neither perpendicular to the first direction nor to the second direction. The drive direction can have any angle between the first and the second direction. This means that a movement in the drive direction may be partitioned into a movement in the first direction and a movement in the second direction. A movement in the drive direction may therefore stimulate the oscillation in the first direction and stimulate the oscillation in the second direction. If the vibration motor is driven with a driving frequency that is equal to or near the first resonance frequency, and different from the second resonance frequency, the oscillation in the first direction obtains a higher amplitude than the oscillation in the second direction. In the same manner, when the vibration motor is driven with a driving frequency that is equal to or near the second resonance frequency and different from the first resonance frequency, the oscillation in the second direction obtains the higher amplitude. Depending on the way the vibration motor is driven, the vibration motor may oscillate in the first direction or the second direction or in both directions with variable amplitude of both oscillations. Therefore a large variety of different vibration forms may be performed with the vibration motor.

The first drive element comprises a magnetic core and at least one coil winding that form an electro magnet for generating the magnetic field. Such an electro magnet has many advantages. By simply introducing a current through the coil winding, the magnetic field may be activated, deactivated or the polarity of the magnetic field may be reversed in a very fast way. The magnetic core guides and amplifies the magnetic field and thus ensures a strong driving force.

The geometry and/or the orientation of the magnetic core defines the direction of the magnetic field generated by the electro magnet and therefore influences the force acting on the second drive element, which in turn defines the drive direction. Hence, the drive direction can be defined by the orientation of the magnetic core. The magnetic core can have its main axis oriented in a direction between the first direction and the second direction, for example the angle bisector of the first direction and the second direction.

Alternatively the driving direction can be oriented in a direction between the first and the second direction but with a larger part to the direction with the smaller spring constant than to the direction with the larger spring constant. Hence, when the spring constant in the first direction is larger than in the second direction, the angle between the drive direction and the first direction is larger than the angle between the drive direction and the second direction. Such an orientation improves the energy transfer for a typical oscillation with both frequencies, since the oscillation in the direction with the smaller spring constant has a larger amplitude. The drive direction can be oriented in such a way, when the magnetic core is oriented with its main axis in this direction. Therefore, the second drive element typically stays nearer to the magnetic core during the oscillation, resulting in a better energy transfer.

In a further aspect, the at least one spring element comprises a leaf spring, i.e. a flat spring element having, for example the form of a strip. Such a leaf spring typically consists of a piece of sheet metal, wherein the surface of the sheet metal defines the main plane of the leaf spring. Such a leaf spring has its lowest spring constant for a deflection in the direction perpendicular to the main plane and a larger spring constant in a direction parallel to the main plane.

According to an aspect, the first direction may be defined by the direction perpendicular to the main plane and the second direction may lie parallel to the main plane of the leaf spring. Therefore, if the second drive element is moved in the first direction, a small resetting force pulls the second drive element back in its initial position and if the second drive element is moved in the second direction a strong force pulls the second drive element back in its initial position. A leaf spring is very cheap to manufacture and its spring constant and, therefore, the resonance frequencies in the first and second direction may be adapted easily by changing the geometry or the leaf spring material. As an alternative to a sheet metal leaf spring other materials may be used. For example, the leaf spring may be made of a plastic material, e.g. fiber reinforced plastic.

Orientation of fibers in a fiber reinforced plastic leaf spring may be used to tailor the spring constants in different directions as desired.

The at least one spring element may comprise a twisted leaf spring. By twisting the leaf spring, the necessary force for a movement in the second direction is reduced and the force for a movement in the first direction is increased. Thereby the spring constant in the first direction and the spring constant in the second direction may be adjusted. Depending on the degree of twisting of the leaf spring, the first resonance frequency and the second resonance frequency may be adapted.

The spring element may comprise more than one spring, for example two oppositely disposed springs. As an alternative, the spring element may comprise more than one leaf spring. The spring element may comprise identical leaf springs or different types of springs, for example different leaf springs and/or coil springs. The spring element may comprise a spring rod with various types of cross-sections, like rectangular, elliptic, round, or square cross-sections. The material of the spring element may be anisotropic, resulting in different spring constants for different directions.

In another aspect, the second drive element comprises at least one permanent magnet. If this permanent magnet interacts with the magnetic field generated by the first drive element, strong forces act on the second drive element. Also with a permanent magnet as the part interacting with the magnetic field, not only attractive forces but also repelling forces may be applied. Furthermore, in contrast to an electro magnet the permanent magnet does not need any means for power supply like cables or contacts. This is important since for a moving part, it is disadvantageous to comprise any cables, since they may influence the movement and/or wear off with time, resulting in a defect of the vibration motor.

The orientation of the magnetic core can correspond to the orientation of the permanent magnets. In that case, the drive direction can be defined by the orientation of the main axis of the magnetic core and the corresponding orientation of the permanent magnets.

According to an aspect, the second drive element also comprises a back iron. This back iron guides the magnetic flux of the permanent magnet and therefore reduces the magnetic field strength in the area behind the back iron. This is especially important, if other devices or sensors are used in the vicinity of the vibration motor that are sensitive to magnetic fields.

It is also possible that the at least one spring element is arranged such that the second drive element may also oscillate in a third direction with a third resonance frequency. This results in a vibration motor with an even wider variety of different vibration forms.

An electric hand-held appliance may comprise a vibration motor as described above. The vibrating motion of such an electric hand-held appliance may be adapted for different purposes. For example, the device can run in different vibrating modes that have different vibration frequencies, oscillate in different directions or have different amplitudes. By vibrating in a sequence of different frequencies, the inventive electric hand-held appliance allows generating different sound patterns or even melodies e.g. for a timer signal.

According to one aspect, the electric hand-held appliance comprises a control unit for supplying a control signal to the vibration motor. This control signal may be responsible for the magnetic field generated by the first drive element. Thereby, the control unit may be programed to control the magnetic field and, thus, drive the vibration motor in various manners.

The control signal may contain a frequency corresponding to the first resonance frequency, which drives the second drive element with that frequency. Thereby energy is coupled into the oscillation in the first direction. The control signal may alternatively or additionally contain a frequency corresponding to the second resonance frequency for generating an oscillation in the second direction. Depending on the intended vibrating mode, the control signal may contain a mixture of the first and the second resonance frequency. It is also possible that the control signal comprises a frequency different from the first and second frequency. For example, a frequency between the first and second frequency may be chosen. Also with such a control signal, an oscillation in the first direction and an oscillation in the second direction may be induced.

The control unit may be arranged to determine the amplitude of the oscillations by measuring the induced voltage in the coil winding. Utilizing such a feedback measurement, the control unit may adapt the control signal in order to achieve desired oscillation amplitudes. It is also possible that the electric hand-held appliance comprises an additional sensor for measuring the amplitude of the oscillations and this sensor is read by the control unit.

The electric hand-held appliance may comprise an energy supply, for example a connection to the mains supply and/or an energy source, for example a battery, in particular a rechargeable battery.

According to an aspect, the control signal consists of electric pulses, wherein the length of the pulses is responsible for the energy supplied to the vibration motor. By varying the length of the pulses, the control unit may regulate the energy supply and therefore the amplitude of the oscillations. Such a control signal may be generated in a simple manner, since it may contain only two distinct voltage values, which may be supplied by a digital output of a microcontroller. If the energy source of the electric hand-held appliance is almost depleted, the reachable voltage of the control signal is reduced. This would result in less energy being supplied to the vibration motor and therefore in a reduced amplitude of the oscillations. The control unit may be arranged to increase the length of the pulses if the energy source is almost depleted in order to compensate for the reduced energy source voltage.

The electric hand-held appliance may comprise a vibration sensor. In contrast to a sensor measuring the amplitude of the vibration motor, namely the deflection of the first drive element with respect to the second drive element, the vibration sensor measures the amplitude of the vibration of the electric hand-held appliance. The vibration amplitude may be measured at a position relevant for the function of the electric hand-held appliance. The vibration sensor may comprise one or more acceleration sensors.

In the electric hand-held appliance, the vibration sensor and/or another vibration sensor may be used to determine how firm a user holds the electric hand-held appliance. It is possible to increase the vibration amplitude when the user holds the electric hand-held device in a firm grip and to decrease the vibration amplitude if the user holds the electric hand-held appliance in a soft grip. Thereby, the user may intuitively adjust the vibration strength.

The amplitude of the oscillations may be increased or decreased continuously. That means, the amplitude of the oscillations is increased from a first low value to a second higher value over a predefined period of time. Thereby, the user does not notice an abrupt change in the amplitude or especially does not perceive the change as unpleasant.

The electric hand-held appliance may comprise a usage sensor that is arranged to determine if the electric hand-held appliance is actually in use. The amplitude of the oscillations may then be reduced if the electric hand-held appliance is not in use and increased if the electric hand-held appliance is in use. Thereby, the unpleasant vibrations occuring while the user is only holding the appliance are reduced. For example, if the electric hand-held appliance is a shaver, a sensor may detect if the blade touches the skin of the user by e.g. measuring the electric contact or by measuring the angle between the shaver head and the grip piece. In the case of an electric tooth brush, the sensor may determine if the tooth brush is pushed against the teeth of the user.

The electric hand-held appliance may also comprise an electrical toothbrush. The electrical toothbrush can perform a brushing movement parallel to the surface of the teeth and a tapping movement normal to the surface of the teeth. The vibration motor can be arranged in way to drive the brushing movement with a frequency corresponding to the first resonance frequency, which can be the lower frequency and the tapping movement with a frequency corresponding to the second resonance frequency, which can be the higher frequency.

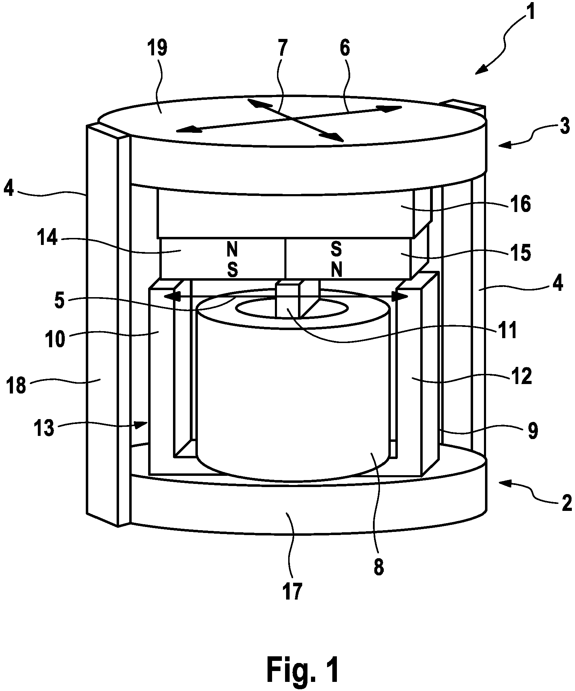

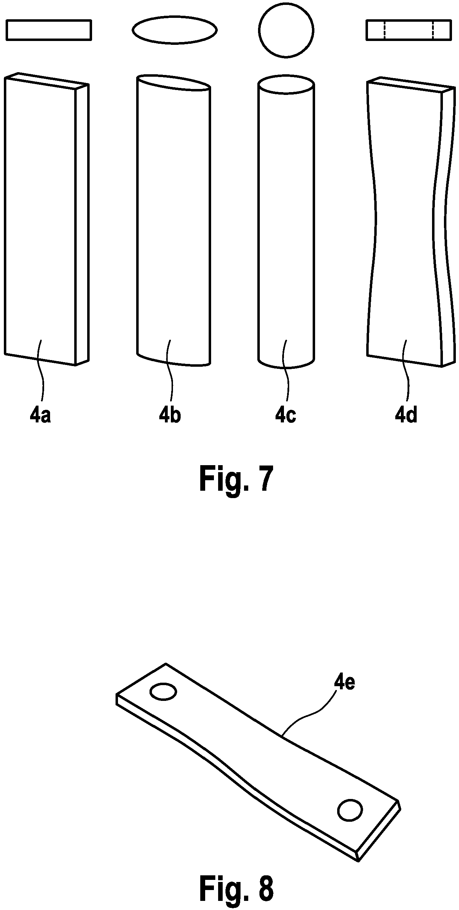

Fig. 1 shows a vibration motor 1 comprising a first drive element 2 and a second drive element 3. The first drive element 2 and the second drive element 3 are coupled by two leaf springs 4. The leaf springs 4 are mounted to the first drive element 2 with their first end and to the second drive element 3 with their opposite end. In Fig. 1, the leaf springs 4 are each depicted as straight strips. This simple embodiment is also depicted in Fig. 7 as leaf spring 4a. However, instead of this arrangement, one or more different springs 4b - 4e, as depicted in Fig. 7 and 8, may be implemented into the vibration motor 1.

Alternatively the vibration motor can work with only one spring element 4. The fact that this would lead to an initial tension to the spring element 4 due to the vibration mass resting on the spring element 4 does not disturb the function of the vibration motor 1. This initial tension can be prevented if desired, when the single spring is arranged symmetrically with respect to the vibration mass.

The first drive element 2 comprises a base 17 which can e.g. be mounted to the housing of an electric hand-held appliance. Mounted on this base 17 is an iron core in the form of an E-core 9 with a coil winding 8 arranged on the center part 11 of the E-core 9. The E-core 9 and the coil winding 8 form an electromagnet 13, which is facing the second drive element 3. The second drive element 3 comprises a vibration mass 19, a first permanent magnet 14 and a second permanent magnet 15. The permanent magnets 14, 15 are fixed on a back iron 16, which is mounted to the vibration mass 19. The back iron 16 may consist of a ferromagnetic material, like iron, and guides the magnetic flux of the permanent magnets 14, 15. Thereby, magnetic stray fields are reduced that could interfere with any other devices arranged near the vibration motor. The permanent magnets 14, 15 of the second drive element 3 are facing the electromagnet 13 of the first drive element 2 comprising the E-core 9 and the coil winding 8.

The leaf springs 4 have a main plane 18 which defines two directions 6, 7 in which the spring can be deflected. The first direction 6 is the direction perpendicular to the main plane 18, wherein the leaf spring 4 has its smallest spring constant for a deflection of the leaf spring 4 in the first direction 6. The second direction 7 runs parallel to the main plane 18 and perpendicular to the longitudinal axis of the leaf spring 4, i.e. horizontally in Fig. 1. The second direction 7 has a much higher spring constant. Both leaf springs 4 of the vibration motor 1 are arranged on opposite sides of the vibration motor 1 and are parallel to each other. Thereby, the leaf springs 4 define two oscillation directions 6, 7 for the second drive element, wherein the leaf springs 4 are deflected in the direction perpendicular to the main planes 18, when the second drive element oscillates in the first direction 6. Therefore, if the second drive element 3 is deflected in the first direction 6 the resetting forces pulling the second drive element 3 back in its resting position are relatively weak. If the second drive element 3 is deflected in the second direction 7 the leaf springs 4 are deflected parallel to their main plane 18. Therefore, the resetting forces acting on the second drive element 3 are stronger. The resonance frequency of the oscillation of such a system is proportional to the square root of the spring constant k over the vibrating mass m. Since the vibrating mass is substantially the same for the oscillations in both directions 6, 7, the oscillation in the first direction 6 has a lower frequency, wherein the oscillation in the second direction 7 has a higher frequency. If the second drive element 3 is actuated in the first direction 6, the second drive element 3 oscillates in the first direction 6 with the first resonance frequency. If the second drive element 3 is actuated in the second direction 7 the second drive element 3 oscillates in the second direction 7 with the second resonance frequency.

The spring constant of the spring element in the two directions can be chosen in a way that the superposition of both oscillations results in a harmonic sound. The resulting resonant frequencies can especially have a proportion of 1:2 (octave), 5:4 (major third) or 6:5 (minor third). With such resonance frequency, the vibration is percepted by a user as particularly comfortable.

The second drive element 3 comprises two permanent magnets 14, 15 arranged on the back iron 16, wherein the first permanent magnet 14 is arranged in a way that its magnetic north pole is facing the back iron 16 and its magnetic south pole is facing the electromagnet 13 of the first drive element 2. The second permanent magnet 15 is arranged in the opposite direction such that its magnetic south pole faces the back iron 16 and its magnetic north pole faces the electromagnet 13 of the first drive element 2. If the coil winding 8 is actuated by applying a current through the coil winding 8, a magnetic field is generated by the electromagnet 13 of the first drive element 2. Depending on the direction of the current through the coil winding 8, the electromagnet 13 may have a magnetic north pole at the open end of the center part 11 of the E-core 9 and a magnetic south pole at both open ends of the outer parts 10, 12 of the E-core 9. If the direction of the current through the coil winding 8 is reversed, also the direction of the magnetic field changes. Therefore, at the open end of the center part 11 of the E-core 9 a magnetic south pole emerges and at the open end of the outer parts 10, 12 of the E-core 9, magnetic north poles appear.

If the open end of the center part 11 of the E-core 9 is a magnetic north pole, an attractive force exists between the center part 11 of the E-core 9 and the first permanent magnet 14 since the first permanent magnet 14 has its south pole facing the E-core 9. At the same time, the first outer part 10 of the E-core 9, which faces the first permanent magnet 14, has a south pole at its open end. Therefore, a repulsive force exists between the first outer part 10 of the E-core 9 and the first permanent magnet 14. Also at the same time, the second outer part 12 of the E-core 9, which is facing the second permanent magnet 15, has a south pole at its open end. This south pole attracts the second permanent magnet 15, since the second permanent magnet 15 has its magnetic north pole facing the E-core 9. Between the center part 11 of the E-core 9, with the magnetic north pole, and the second permanent magnet 15 with the magnetic north pole facing the E-core 9, a repulsive force exists. Therefore, all forces pull or push the permanent magnets 14, 15 in the drive direction with the same orientation, resulting in the second drive element 3 being forced in the drive direction 5 with respect to the first drive element 2. In the view of Fig. 1, the second drive element 3 is moving to the right.

If the polarity of the current through the coil winding 8 is changed, also the magnetic polarity in the E-core 9 changes, resulting in a force that accelerates the permanent magnets 14, 15 in the drive direction 5 with the opposite orientation. Therefore, in the view of Fig. 1, the second drive element 3 is moving to the left.

The drive direction is defined by the orientation of the E-core 9 and the corresponding orientation of the permanent magnets 14, 15. Since the E-core 9 and the permanent magnets 14, 15 are arranged angled with respect to the orientation of the leaf springs 4, the drive direction 5 is angled with respect to the first direction 6 and second direction 7, too. Thus, if the second drive element 3 is moved in the drive direction 5, this movement can be split in a movement component in the first direction 6 and a movement component in the second direction 7. Hence, by driving the second drive element 3 in the drive direction 5, the oscillation in the first direction 6 and the oscillation in the second direction 7 may be stimulated. If current is applied to the coil winding 8 with a frequency that equals to or is near the first resonance frequency and different from the second resonance frequency, the energy coupling to the oscillation in the first direction 6 with the first resonance frequency is in phase, resulting in a higher amplitude and the energy coupling to the oscillation in the second direction 7 with the second resonance frequency is out of phase, resulting in a smaller amplitude. Therefore, the second drive element 3 is mainly oscillating in the first direction 6. If, on the other hand, current is supplied to the coil winding 8 with a frequency equal to or near the second resonance frequency, the second drive element 3 starts oscillating in the second direction 7 with the second resonance frequency. If the current supplied to the coil winding 8 has a specific relation between the first and the second resonance frequency, a specific relation between the oscillation in the first and in the second direction 6, 7 may be achieved. It is also possible to supply the coil winding 8 with current of a frequency between the first and the second frequency. This may affect the relation of the amplitudes of the oscillation in the first direction 6 and the oscillation in the second direction 7 by tuning the supply frequency. If the frequency is near to the first resonance frequency, the oscillation in the first direction 6 has a higher amplitude and vice versa.

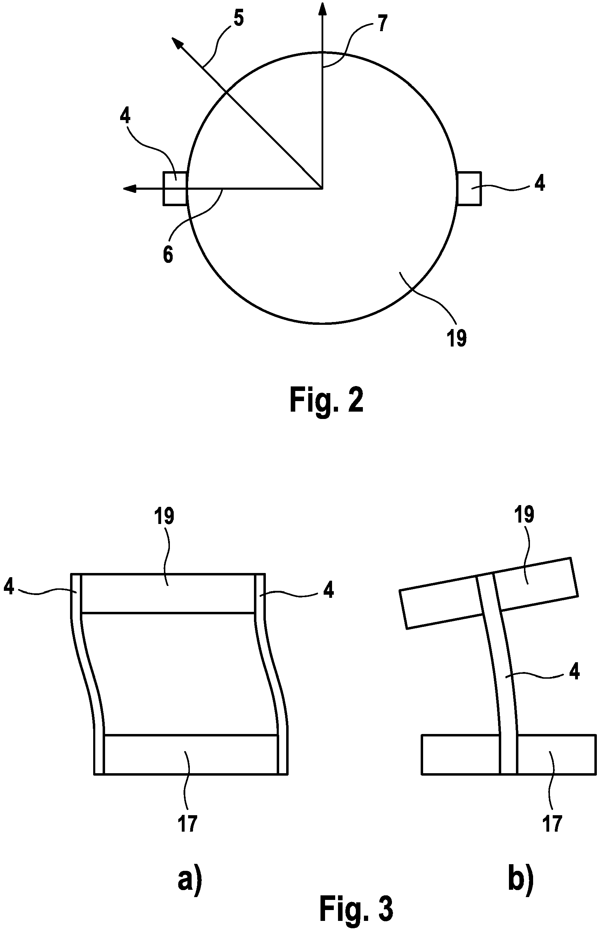

Fig. 2 shows a view from above of the inventive vibration motor. In the shown embodiment, the first direction 6 is perpendicular to the second direction 7. The drive direction 5 is defined by the angle bisector of the first direction 6 and the second direction 7. Alternatively, the angle between the first direction 6 and the second direction 7 can be smaller or larger and the drive direction 5 can have any angle between the first and the second direction 6, 7.

Fig. 3 shows two side views of the movement of the inventive vibration motor 1. Fig. 3 a) shows the vibration motor with a deflection in the first direction 6, wherein Fig.3 b) shows a side view from a different angle that depicts the movement in the second direction 7. Fig. 3 a) shows that the vibration mass 19 moves essentially parallel to the base 17 while oscillating in the first direction 6. In contrast, Fig. 3 b) shows that the vibration mass 19 is moving in a tilted fashion with respect to the base 17, when oscillating in the second direction 7. It is also possible that the oscillation in the first direction 6 and the second direction 7 are both essentially parallel or both moving in a tilted fashion. It is as well possible that the vibration mass 19 is moving in a tilted fashion with respect to the base 17, when moving in the first direction 6 and moving more or less parallel to the base 17, when oscillating in the second direction 7. When the vibration motor 1 comprises only one spring element 4, both oscillations are typically moving in a tilted fashion.

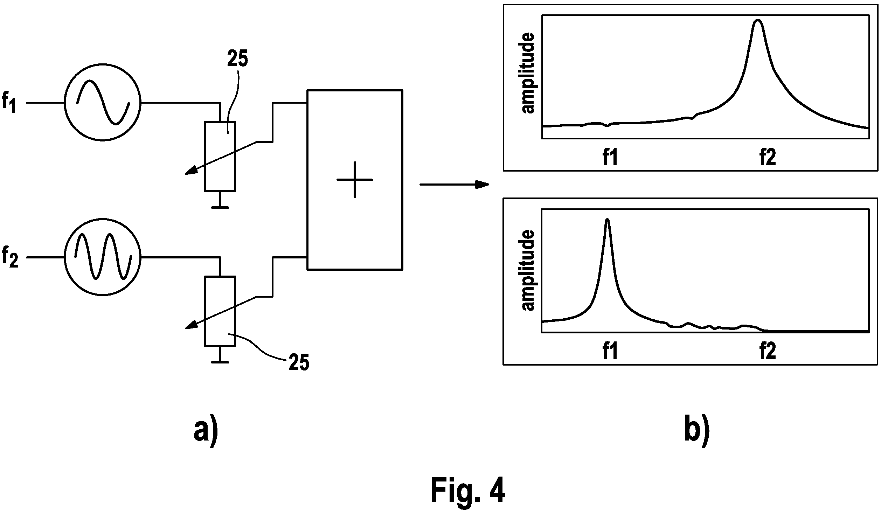

Fig. 4a) shows a simple circuit for generating the control signal for the vibration motor 1. A first frequency and a second frequency signal are generated and their respective strength is adjusted by potentiometers 25. The signals are combined to form the control signal.

Fig 4b) shows the response of the vibration motor 1 to the control signal depending on the excitation frequency. The upper graph shows the amplitude of the oscillation in the first direction 6. When the vibration motor 1 is excited with low frequencies near the first resonance frequency f1, the vibration motor 1 oscillates in the first direction 6 with small amplitude only. When the frequency of the control signal is increased towards the second resonance frequency f2, the amplitude of the oscillation in the first direction 6 also increases. The amplitude of the oscillation in the first direction 6 has its maximum at the second resonance frequency f2. For even higher frequencies, the amplitude of the oscillation in the first direction 6 decreases again. The bottom graph shows the amplitude of the oscillation in the second direction 7. The maximum amplitude is located at the first resonance frequency f1, wherein the amplitude decreases for frequencies higher than said first resonance frequency f1.

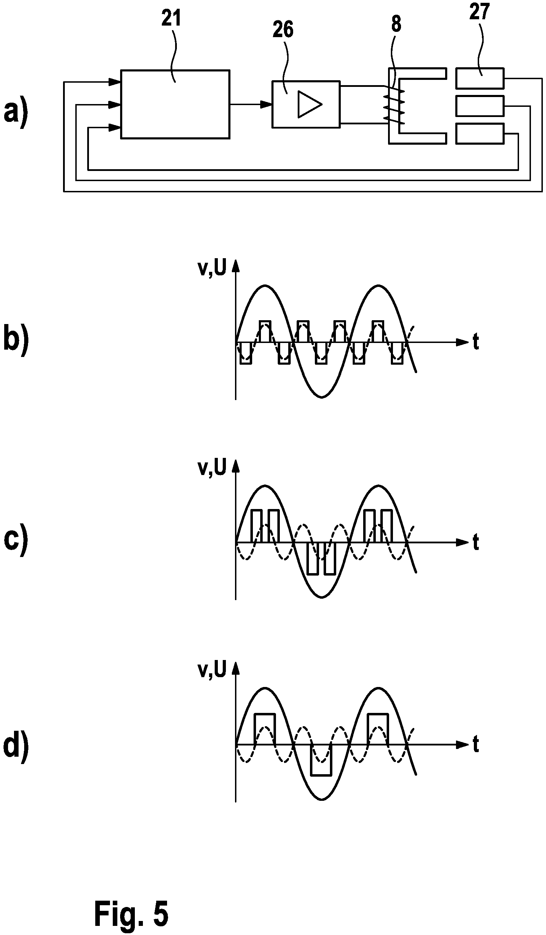

Fig. 5 a) shows a simplified circuit arrangement for the vibration motor 1 with a control unit 21 that generates a control signal for the control of the vibration motor 1 depending on measured data from three sensors 12 that monitor the movement of the vibration motor 1. The control signal is supplied to an amplifier 26 that amplifies the control signal and sends it to the coil 8 in order to drive the vibration motor 1.

Figs. 5 b) to d) show diagrams that exemplify the control of the vibration motor. The diagrams show the velocity of the oscillation in the first direction 6 and the second direction 7 corresponding to the amplitude of the oscillation in the first and second direction 6, 7. Further, the voltage level of the control signal is shown over time. The oscillation in the first direction 6 shows a frequency that is about three times the frequency of the oscillation in the second direction 7.

Fig. 5 b) shows an example, where the positive pulses of the control signal coincide with the maxima of the oscillation in the first direction 6 and the negative pulses coincide with the respective minima. The control signal therefore results in increasing amplitude of the oscillation in the first direction 6. With respect to the oscillation in the second direction 7, the pulses have partially the same sign and partially the opposite sign. The acceleration and deceleration therefore cancel each other out. Hence, the oscillation in the second direction 7 is not significantly influenced by such a control signal.

Fig. 5 c) shows an example where the pulses of the control signal coincide with the zero crossings of the oscillation in the first direction 6. The acceleration and deceleration of the oscillation in the first direction 6 therefore cancel each other out. For the oscillation in the second direction 7, the positive pulses are in proximity to the maxima and the negative pulses in proximity to the minima, resulting in increasing amplitude of the oscillation in the second direction 7.

For the control signal shown in Fig. 5 d), both oscillations are increased, since the positive pulses coincide with maxima of the oscillation in the first and the second direction 6, 7 and the negative pulses coincide with minima of both oscillations.

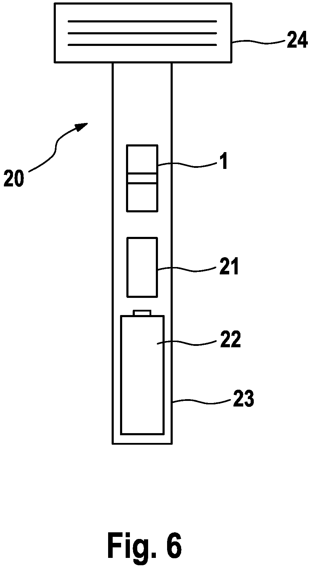

Fig. 6 shows a wet shaving razor 20 which is one example for an electric hand-held appliance. Even though the actual shaving is not purely electric, the shaver 20 comprises a vibration motor 1 to improve shaving. The shaver 20 further comprises a shaft 23 and a shaving head 24 with the blades. The vibration motor 1 is controlled by a control unit 21 which supplies power from a battery 22 or the like energy source to the vibration motor 1. The vibration motor 1, the control unit 21 and the battery 22 are located inside the shaft 23 of the wet shaving razor 20. If the wet shaving razor 20 is turned on in a first soft mode, the wet shaving razor 20 vibrates with a high frequency and with small amplitude. For this purpose, the control unit 21 supplies a control signal to the vibration motor 1 that consists of short pulses with the second resonance frequency. The control signal results in a current through the coil winding 8 of the vibration motor 1 with the second resonance frequency and thus the drive force applied to the second drive element 3 has the second resonance frequency. As a result, the main part of the energy is coupled into the oscillation in the second direction 7.

Since the control signal consists only of short pulses, the total amount of energy supplied to the vibration motor 1 is very small. Therefore, the vibration motor 1 is vibrating with the second resonance frequency at a small amplitude.

If the second drive element 3 is oscillating, the permanent magnets 14, 15 of the second drive element 3 move in front of the E-core 9 of the first drive element 2. This results in a change of the magnetic flux through the coil winding 8 of the first drive element 2. This change of magnetic flux induces a voltage into the coil winding 8 of the first drive element 2, which can be detected by the control unit 21. This signal is indicative of the oscillations performed by the second drive element 3. By analyzing this signal, the control unit 21 may determine information about the amplitude of the oscillation in the first direction 6 and the amplitude of the oscillation in the second direction 7. Hence, the control unit 21 may adapt the control signal supplied to the vibration motor 1 in order to adjust the resulting oscillations.

As soon as the user puts the wet shaving razor to his or her skin, this may be detected by the control unit 21 by means of the electric contact of the blades with the skin. As a result, the control unit 21 may increase the amplitude of the vibration. This is done by changing the length of the pulses supplied to the vibration motor 1. Therefore, more energy is supplied to the vibration motor 1 and the amplitude of the oscillation in the second direction 7 increases.

If the user changes the vibration mode from the first soft mode to a second massage mode, the control unit 21 may change the frequency of the vibration. This is done by changing the frequency of the control signal from the second resonance frequency to the first resonance frequency. The second drive element 3 of the vibration motor 1 is then starting to oscillate in the first direction 6 with the first resonance frequency.

If the battery power decreases, the open circuit voltage of the battery 22 decreases, too. This results in a decreasing voltage of the pulses supplied to the vibration motor 1. In order to keep up the amount of energy supplied to the vibration motor 1, the control unit 21 may detect the decreasing open circuit voltage of the battery 22 and in turn increase the length of the pulses supplied to the vibration motor.

Fig. 7 shows four examples with different forms of springs that can be used for an inventive vibration motor 1. The example 4a on the left most side of fig. 7 is the simplest form with a rectangular cross section. The spring element 4b has an elliptic cross-section and therefore different vibration characteristics. The spring rod 4c has a round cross-section and would therefore have symmetric properties, if the material would be isotropic. With an anisotropic material however, such a spring rod can have different spring constants in different directions. The leaf spring 4d has a waisted geometry and can therefore bend more easily in the middle part.

With twisted leaf spring 4e shown in fig. 8, the end attachable to the first drive element 2 is not parallel to the end attachable to the second drive element 3. Rather, the ends of the leaf spring 4e are distorted with respect to each other as is depicted in Fig. 8.

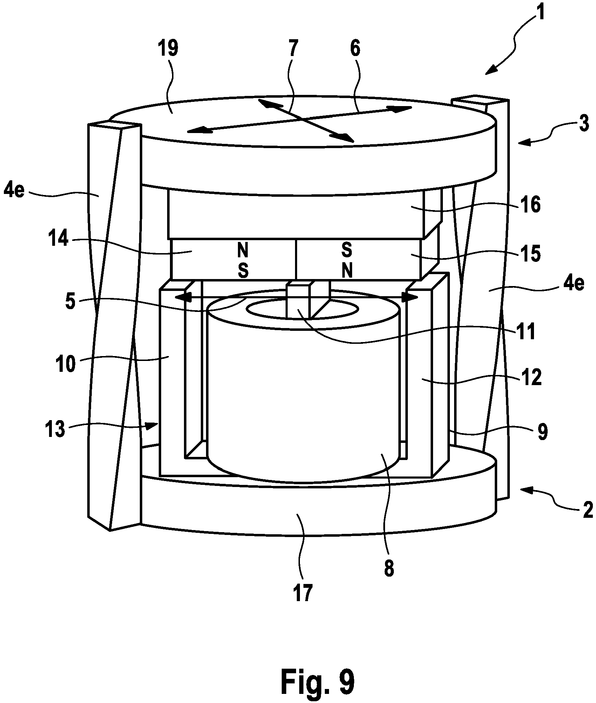

Fig. 9 shows an inventive vibration motor 1 with two twisted leaf springs 4e as spring element. The vibration characteristics of the vibration motor 1 can therefore be adapted by selecting the geometry of twisted leaf spring, like the cross section, the length and the twist angle. The twisted leaf spring depicted in fig. 9 has a square cross section and is twisted by 90°. In another possibility, the twisted leaf spring 4e can have a different cross section, for example a rectangular, eliptic or round cross section. Also the twisted leaf spring can be twisted by any angle smaller or larger than 90°.

With an inventive vibration motor or an inventive electric hand-held appliance with such a vibration motor, it is possible to achieve many different forms of vibration with just one single vibration motor.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### Reference signs:

- 1: vibration motor
- 2: first drive element
- 3: second drive element
- 4: leaf spring
- 4a: rectangular leaf spring
- 4b: eliptic leaf spring
- 4c: round leaf spring
- 4d: waisted leaf spring
- 4e: twisted leaf spring
- 5: drive direction
- 6: first direction
- 7: second direction
- 8: coil winding
- 9: E-core
- 10: first outer part of the E-core
- 11: center part of the E-core
- 12: second outer part of the E-core
- 13: electromagnet
- 14: first permanent magnet
- 15: second permanent magnet
- 16: back iron
- 17: base
- 18: main plane
- 19: vibration mass
- 20: wet shaving razor
- 21: control unit
- 22: battery (energy source)
- 23: shaver shaft
- 24: shaver head
- 26: amplifier
- 27: sensors

## Claims

1. A vibration motor for an electric hand-held appliance (20) comprising a first drive element (2) and a second drive element (3) and at least one spring element (4) coupling the first drive element (2) to the second drive element (3), wherein the first drive element (2) comprises a magnetic core and at least one coil winding that form an electro magnet for generating a magnetic field that forces the second drive element (3) in a drive direction (5),
**characterized in that** the at least one spring element (4) has differing spring constants in two directions resulting in at least a first resonance frequency in a first direction (6) and a second resonance frequency in a second direction (7), wherein the at least one spring element (4) is arranged such that the drive direction (5) is not perpendicular to the first and second direction (6, 7) and can have any angle between the first and the second direction.

2. The vibration motor according to claim 1, **characterized in that** the at least one spring element comprises a leaf spring, particularly a twisted leaf spring (4).

3. The vibration motor according to claim 2, **characterized in that** the first direction (6) lies perpendicular to the main plane (18) of the leaf spring (4) and the second direction (7) lies parallel to the main plane (18) of the leaf spring (4).

4. The vibration motor according to any of the preceding claims, **characterized in that** the at least one spring element comprises two oppositely disposed springs (4).

5. The vibration motor according to any of the preceding claims, **characterized in that** the spring constant in the first direction is larger than in the second direction and the angle between the drive direction and the first direction is larger than the angle between the drive direction and the second direction.

6. The vibration motor according to any of the preceding claims, **characterized in that** the second drive element (3) comprises at least one permanent magnet (14, 15) and/or a back iron (16).

7. An electric hand-held appliance comprising a vibration motor (1) according to one of the preceding claims.

8. The electric hand-held appliance according to claim 7, **characterized in that** the electric hand-held appliance (20) comprises a control unit (21) for supplying a control signal to the vibration motor (1).

9. The electric hand-held appliance according to claim 8, **characterized in that** the control signal comprises a frequency corresponding to the first resonance frequency for generating an oscillation in the first direction (6) and/or a frequency corresponding to the second resonance frequency for generating an oscillation in the second direction (7).

10. The electric hand-held appliance according to claim 8 or 9, **characterized in that** the control unit (21) determines the amplitude of the oscillations by measuring the induced voltage in the coil winding (8) and/or by a sensor.

11. The electric hand-held appliance according to any of the claims 8 to 10, **characterized in that** the control signal comprises pulses and the control unit (21) varies the length of the pulses in order to regulate the amplitude of the oscillations.

12. The electric hand-held appliance according to any of the claims 8 to 11, **characterized in that** a vibration sensor, particularly an acceleration sensor, measures the amplitude of the vibration of the electric hand-held appliance (20).

13. The electric hand-held appliance according to claim 12, **characterized in that** the vibration-sensor and/or a second vibration sensor determines how tight a user holds the electric hand-held appliance (20).

14. The electric hand-held appliance according to claim 8, **characterized in that** the control unit (21) determines if the electric hand-held appliance (20) is in use by means of a usage-sensor and increases and/or decreases the amplitude of the oscillations accordingly and where appropriate the amplitude of the oscillations are increased and/or decreased continuously.

15. The electric hand-held appliance according to any of the preceding claims, **characterized in that** the electric hand-held appliance comprises an electrical toothbrush.
